# EUROPÄISCHE PATENTSCHRIFT

(11) **EP 3 785 938 B1**
(45) Veröffentlichungstag und Bekanntmachung des Hinweises auf die Patenterteilung: **15.06.2022**
(21) Anmeldenummer: 20189523.2
(22) Anmeldetag: 05.08.2020
(51) Int. Cl.: B60C 11/03, B60C 11/12

(54) **FAHRZEUGLUFTREIFEN**
PNEUMATIC TYRE
PNEUMATIQUE DE VÉHICULE

(30) Priorität: 29.08.2019 DE 102019213044
(43) Veröffentlichungstag der Anmeldung: 03.03.2021
(73) Patentinhaber: Continental Reifen Deutschland GmbH, 30165 Hannover (DE)
(72) Erfinder: Brockmann, Jürgen, 30419 Hannover (DE); Seng, Matthias, 30419 Hannover (DE); Heinhaupt, Torsten, 30419 Hannover (DE)
(74) Vertreter: Continental Corporation

(56) Entgegenhaltungen:
- EP-A1- 0 604 383
- EP-A1- 1 752 314
- DE-A1- 19 705 156
- DE-A1-102007 061 148

## Beschreibung

Die Erfindung betrifft einen Fahrzeugluftreifen mit einem laufrichtungsgebunden ausgeführten Laufstreifen, welcher durch V-förmig zueinander verlaufende Schrägrillen, jeweils zwei zwischen in Umfangsrichtung benachbarten Schrägrillen verlaufende weitere Rillen und zumindest eine im Bereich der Reifenäquatorialebene verlaufende, zentrale Umfangsrille in Profilblöcke gegliedert ist, wobei in jeder Laufstreifenhälfte Schrägrillen, welche in die bzw. in eine zentrale Umfangsrille einmünden, und Schrägrillen, welche vor der bzw. vor einer zentralen Umfangsrille enden, verlaufen, wobei in Umfangsrichtung jeweils eine vor der bzw. vor einer zentralen Umfangsrille endende Schrägrille mit einer in die bzw. in eine zentrale Umfangsrille einmündenden Schrägrille abwechselt und wobei an der jeweiligen zentralen Umfangsrille Profilblöcke gebildet sind, in welche die vor dieser zentralen Umfangsrille endenden Schrägrillen hineinverlaufen.

Ein derartiger Fahrzeugluftreifen ist beispielsweise aus der EP 1 752 314 A1 bekannt. Gemäß einem Ausführungsbeispiel weist der Fahrzeugluftreifen einen laufrichtungsgebunden ausgeführten Laufstreifen mit in Draufsicht V-förmig zueinander und jeweils bogenförmig verlaufenden Schrägrillen, einer gerade verlaufenden zentralen Umfangsrille und jeweils zwei zwischen in Umfangsrichtung benachbarten Schrägrillen verlaufenden weiteren Rillen auf. Die weiteren Rillen verlaufen im Wesentlichen in Umfangsrichtung, wobei die in jeder Laufstreifenhälfte weiter laufstreifenaußenseitig befindlichen weiteren Rillen bezüglich der Umfangsrichtung gleichsinnig zu den Schrägrillen geneigt sind. Zu den Schrägrillen gehören in die zentrale Umfangsrille einmündende Schrägrillen und vor der zentralen Umfangsrille endende Schrägrillen, welche in an der zentralen Umfangsrille ausgebildete Profilblöcke hineinverlaufen, wobei die beiden Arten von Schrägrillen in jeder Laufstreifenhälfte in Umfangsrichtung abwechselnd aufeinanderfolgen. Dieser Reifen soll unter anderem gute Wasserdrainageeigenschaften aufweisen.

Ferner ist aus der DE 10 2007 061 148 A1 ein Fahrzeugluftreifen mit einem Laufstreifen bekannt, bei welchem V-förmig zueinander verlaufende Schrägrillen in eine zentrale Umfangsrille einmünden und welcher zwischen den Schrägrillen verlaufende Rillen aufweist. Die zwischen den Schrägrillen verlaufenden Rillen weisen eine von ihrem einlaufenden Ende zu ihrem auslaufenden Ende zunehmende Breite auf. In jedem schulterseitigen Profilblock verläuft ferner eine den Profilblock teilende Querrille. Ein Reifen mit einem derart profilierten Laufstreifen soll ein gutes Wasserdrainagevermögen aufweisen, ist allerdings im Hinblick auf seine Fahreigenschaften auf trockener und schneebedeckter Fahrbahn, insbesondere hinsichtlich seiner Handlingeigenschaften, weiter verbesserungsbedürftig.

Die DE 197 05 156 A1 offenbart einen Fahrzeugluftreifen mit einem laufrichtungsgebunden ausgeführten Laufstreifen, welcher durch Umfangsrillen und Querrillen in zwei schulterseitige Profilblockreihen und zwei mittlere Profilblockreihen gegliedert ist. Die mittleren Profilbockreihen weisen in beide Umfangsrillen einmündende Querrillen und ausschließlich in die jeweilige schulterseitige Umfangsrille einmündende und vor der zentralen Umfangsrille endende Querrillen auf, wobei die beiden Arten von Querrillen in Umfangsrichtung abwechselnd ausgebildet sind. Ferner sind die mittleren Profilblöcke mit in Draufsicht gegensinnig zu den Querrillen geneigten Einschnitten versehen. Der Reifen soll einen guten Schneegriff und eine gute Wasserableitfähigkeit aufweisen.

Ferner ist aus der EP 0 604 383 A1 ein Fahrzeugluftreifen mit einem laufrichtungsgebunden ausgeführten Laufstreifen mit zwei zentralen Umfangsrillen, zwei schulterseitigen Umfangsrillen und V-förmig zueinander verlaufenden Schrägrillen bekannt. Die Schrägrillen sind durch die schulterseitigen Umfangsrille unterbrochen und enden vor den zentralen Umfangsrillen, wobei an diesen Profilblöcke ausgebildet sind, in welche die Schrägrillen hineinverlaufen. Diese Profilblöcke sowie schulterseitig vorgesehene Profilblöcke sind jeweils mit Einschnitten und im Wesentlichen in Umfangsrichtung verlaufenden, einer definierten Kurve folgenden Entlüftungsnuten versehen. Der Reifen soll sich bei der Vulkanisation gut entlüften lassen und ein reduziertes Reifen-Fahrbahn-Geräusch aufweisen.

Der Erfindung liegt die Aufgabe zugrunde, bei einem Fahrzeugluftreifen der eingangs genannten Art die Performance, insbesondere die Handlingeigenschaften, auf trockner und auf schneebedeckter Fahrbahn gleichermaßen zu verbessern.

Gelöst wird die gestellte Aufgabe erfindungsgemäß dadurch, dass die weiteren Rillen bezüglich der Umfangsrichtung gegensinnig zu den Schrägrillen geneigt sind, wobei die zentrale(n) Umfangsrille(n) in Draufsicht zickzack-förmig verläuft bzw. verlaufen und sich aus geraden, jeweils an einem Rillenknick aneinander anschließenden Rillenabschnitten zusammensetzt bzw. zusammensetzen, wobei die in der einen Laufstreifenhälfte verlaufenden Schrägrillen zu den in der anderen Laufstreifenhälfte verlaufenden Schrägrillen in Umfangsrichtung versetzt sind und wobei die Schrägrillen, welche in die bzw. eine der zentrale(n) Umfangsrille(n) einmünden, jeweils an einer außenseitigen Knickstelle der zentralen Umfangsrille einmünden.

Die an der bzw. an den zentralen Umfangsrille(n) liegenden Profilblöcke weisen daher gegenüber den sonstigen Profilblöcken eine größere Umfangslänge und eine höhere Umfangs- sowie Quersteifigkeit auf, wodurch gute Handlingeigenschaften auf schneebedeckter und trockner Fahrbahn erzielt werden. Die Kombination aus in eine zentrale Umfangsrille einmündenden Schrägrillen und vor der dieser endenden Schrägrillen sorgt weiterhin für eine wirkungsvolle Wasserableitung. Die Fahreigenschaften auf trockner, nasser und schneebedeckter Fahrbahn sind daher bei einem erfindungsgemäßen Reifen auf besonders vorteilhafte Weise verbessert. Der Zickzack-Verlauf der zentralen Umfangsrille(n) ermöglicht beim Fahren auf schneebedeckter Fahrbahn ein Eindringen von Schnee zur Erzielung des Effektes der Schnee-Schnee-Reibung. Die in der einen Laufstreifenhälfte verlaufenden Schrägrillen sind zu den in der anderen Laufstreifenhälfte verlaufenden Schrägrillen in Umfangsrichtung versetzt, wobei die Schrägrillen, welche in die bzw. eine der zentrale(n) Umfangsrille(n) einmünden, jeweils an einer außenseitigen Knickstelle der Umfangsrille einmünden, was für eine gute Wasserableitung von Vorteil ist.

Bevorzugter Weise weist der Laufstreifen eine einzige an der Reifenäquatorialebene verlaufende, zentrale Umfangsrille auf.

Gemäß einer weiteren bevorzugten Ausführung ist in den Profilblöcken, in welche Schrägrillen hineinverlaufen, jeweils ein Einschnitt mit einer Tiefe von 70% bis 100% der Profiltiefe und einer Breite von 0,5 mm bis 2,0 mm, vorzugsweise von 0,8 mm bis 1,5 mm, ausgebildet, wobei der Einschnitt zwischen dem laufstreifeninnenseitigen Ende der jeweiligen Schrägrille und der bzw. einer zentralen Umfangsrille verläuft. Durch diesen Einschnitt lässt sich die Steifigkeit der an der zentralen Umfangsrille liegenden Profilblöcke derart beeinflussen, dass ein gleichmäßiger Abrieb des Laufstreifens gewährleistet ist.

Bevorzugt ist eine Ausführung des Einschnittes, bei welcher dieser aus einem in Fortsetzung der Schrägrille verlaufenden Einschnittabschnitt und einem in die bzw. die jeweilige zentrale Umfangsrille einmündenden, zur axialen Richtung unter einem Winkel von 0° bis 15°, insbesondere von zumindest 5°, vorzugsweise von 8° bis 12°, verlaufenden Einschnittabschnitt zusammensetzt ist. Die sich dadurch ergebenden, an den Einschnitt angrenzenden Blocksegmente weisen im Bereich der an der zentralen Umfangsrille liegenden Einschnittmündung keine spitzwinkeligen Eckbereiche auf, wodurch ebenfalls ein gleichmäßiger Abrieb unterstützt wird.

Gemäß einer weiteren bevorzugten Ausführung weist bzw. weisen die zentrale(n) Umfangsrille(n) an der Laufstreifenperipherie eine konstante Breite von 3,0 mm bis 5,5 mm, insbesondere von bis zu 4,5 mm, auf. Auch diese Maßnahme trägt zu einem gleichmäßigen Abrieb, insbesondere der bei der zentralen Umfangsrille befindlichen Profilblöcke, bei.

Bevorzugt verlaufen dabei die Rillenabschnitte der zentralen Umfangsrille(n) zur Umfangsrichtung unter einem Winkel von 3° bis 15°, insbesondere von bis zu 12°.

Gemäß einer weiteren bevorzugten Ausführung weist der Fahrzeugluftreifen einen Laufstreifen mit parallel zueinander verlaufenden Einschnitten in den Profilblöcken auf, wobei die Einschnitte in den Profilblöcken, in welche Schrägrillen hineinverlaufen, in Draufsicht zur axialen Richtung unter einem Winkel von 0° bis 15°, insbesondere von zumindest 5°, vorzugsweise von 8° bis 12°, verlaufen und die Einschnitte in den sonstigen Profilblöcken in Draufsicht parallel zu den Schrägrillen verlaufen. Derart angeordnete Einschnitte sorgen auf schneebedeckten Fahrbahnen für eine gute Traktion- und Bremsperformance.

Für die Handlingeigenschaften des Fahrzeugluftreifens ist es von zusätzlichem Vorteil, wenn die weiteren Rillen, welche zwischen in Umfangsrichtung benachbarten Schrägrillen verlaufen, eine Tiefe von 40% bis 70% der Profiltiefe aufweisen, wobei vom Rillengrund der Rillen jeweils ein sich durch die Rille hindurcherstreckender, in radialer Richtung verlaufender Einschnitt mit einer Tiefe von mindestens 1,5 mm und einer Breite von 0,4 mm bis 0,8 mm ausgeht.

Gemäß einer weiteren bevorzugten Ausführung setzen sich die Schrägrillen jeweils aus einem laufstreifeninnenseitigen Rillenabschnitt und einem zum Laufstreifenrand verlaufenden, zur Umfangsrichtung gegenüber dem laufstreifeninnenseitigen Rillenabschnitt stärker geneigten, schulterseitigen Rillenabschnitt zusammen, wobei die zwischen den Schrägrillen verlaufenden Rillen in die laufstreifeninnenseitigen Rillenabschnitte einmünden.

Ferner ist es bevorzugt, wenn jene weiteren Rillen, welche weiter laufstreifeninnenseitig verlaufen, bezogen auf einen mittig auf ihrer Mittellinie liegenden Punkt, zur Reifenäquatorialebene in axialer Richtung einen Abstand aufweisen, welcher 4,5% bis 24,5%, insbesondere 10% bis 17%, der Breite (B) der Bodenaufstandsfläche beträgt

Darüber hinaus ist es bevorzugt, wenn jeweils jene weiteren Rillen, welche weiter laufstreifenaußenseitig verlaufen, bezogen auf einen mittig auf ihrer Mittellinie liegenden Punkt, zur Reifenäquatorialebene in axialer Richtung einen Abstand aufweisen, welcher 21,5% bis 41,5%, insbesondere 25% bis 38%, der Breite der Bodenaufstandsfläche beträgt.

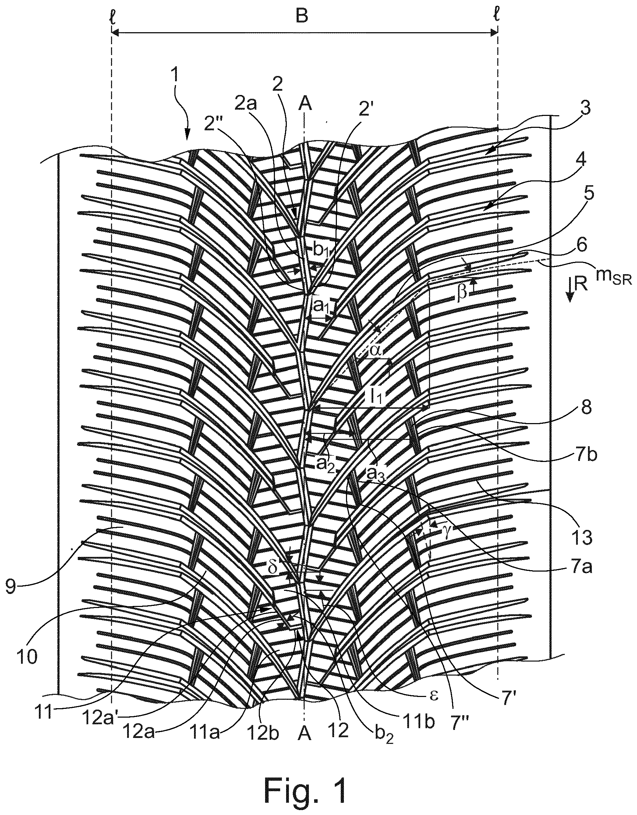

Weitere Merkmale, Vorteile und Einzelheiten der Erfindung werden nun anhand der einzigen Figur, Fig. 1, die schematisch eine Draufsicht auf eine Teilabwicklung eines Laufstreifens eines Fahrzeugluftreifens mit einer Ausführungsvariante der Erfindung zeigt, näher erläutert.

Gemäß der Erfindung ausgeführte Fahrzeugluftreifen sind insbesondere Reifen in Radialbauart für Personenkraftwagen, Vans oder Light-Trucks, wobei die Reifen zum Fahren unter winterlichen Fahrbedingungen vorgesehen sind.

Fig. 1 zeigt eine Draufsicht auf einen Laufstreifen 1, wobei die Äquatorialebene des Reifens durch eine Linie A-A und die seitlichen Ränder der Bodenaufstandsfläche durch zwei Linien 1 gekennzeichnet sind. Die Bodenaufstandsfläche entspricht bekannter Weise dem statisch ermittelten Footprint (ermittelt mit einem auf einer Normfelge montierten Reifen, Last bei 70 % der maximalen Tragfähigkeit, Innendruck 85 % des Normdruckes, gemäß ETRTO-Standards) und weist in axialer Richtung eine Breite B auf. Der Laufstreifen 1 weist, wie noch genauer erläutert wird, eine laufrichtungsgebundene Profilierung auf und ist derart am Fahrzeug zu montieren, dass er die in Fig. 1 durch den Pfeil R angedeutete Abrollrichtung bei Vorwärtsfahrt aufweist.

Der Laufstreifen 1 ist, wie an sich üblich, gemäß einem Verfahren der Pitchlängenvariation geräuschoptimiert und setzt sich aus in Umfangsrichtung aufeinanderfolgenden Pitches (gleichartig gestaltete Profilabschnitte) zusammen, wobei die in der einen Laufstreifenhälfte ausgebildeten Profilelemente um 30% bis 60%, vorzugsweise um mindestens 40%, einer mittleren Pitchlänge in Umfangsrichtung zu den in der anderen Laufstreifenhälfte ausgebildeten Profilelementen versetzt sind.

Der Laufstreifen 1 ist mit einer entlang der Äquatorialebene (Linie A-A) verlaufenden zentralen Umfangsrille 2 sowie mit in Draufsicht über die Laufstreifenbreite V- förmig zueinander verlaufenden Schrägrillen 3, 4 versehen, wobei - wie noch erläutert wird - in jeder Laufstreifenhälfte Schrägrillen 3 und Schrägrillen 4 verlaufen. Die zentrale Umfangsrille 2 und die Schrägrillen 3, 4 bilden die Haupt(entwässerungs)rillen des Laufstreifens, wobei zumindest die Schrägrillen 3, 4, bevorzugter Weise auch die Umfangsrille 2, auf die jeweils vorgesehene Profiltiefe von üblicherweise 6,5 mm bis 10,0 mm ausgeführt sind. Die Abrollrichtung des Reifens bei Vorwärtsfahrt ist derart, dass die Schrägrillen 3, 4 zuerst mit ihren laufstreifeninnenseitigen Enden in die Bodenaufstandsfläche eintreten.

Die zentrale Umfangsrille 2 verläuft beim gezeigten Ausführungsbeispiel in Draufsicht zickzack-förmig und setzt sich aus Rillenabschnitten 2a zusammen, welche zur Umfangsrichtung unter einem Winkel von 3° bis 15°, insbesondere von bis zu 12°, verlaufen, wobei unmittelbar aufeinanderfolgende Rillenabschnitte 2a - entsprechend der Zickzack-Form - bezüglich der Umfangsrichtung gegensinnig zueinander geneigt sind. Am gegenseitigen Anschlussbereich der Rillenabschnitte 2a weist die Umfangsrille 2 jeweils einen Rillenknick mit einer Knickaußenseite 2' und einer Knickinnenseite 2" auf. An der Laufstreifenperipherie weist die Umfangsrille 2 eine insbesondere konstante Breite b₁ von 3,0 mm bis 5,5 mm, insbesondere von bis zu 4,5 mm, auf.

In jeder Laufstreifenhälfte folgt in Umfangsrichtung abwechselnd eine Schrägrille 3 auf eine Schrägrille 4, wobei die Schrägrillen 3, 4 in jeder Laufstreifenhälfte in Draufsicht parallel zueinander verlaufen und wobei die Schrägrillen 3 an den Knickaußenseiten 2' der Umfangsrille 2 in diese einmünden und die Schrägrillen 4 in einem in axialer Richtung ermittelten Abstand a₁ von 5% bis 15%, insbesondere von bis zu 12%, der Breite B der Bodenaufstandsfläche vor der Äquatorialebene (Linie A-A) enden bzw. auslaufen. Die Schrägrillen 4 verlaufen jeweils in Richtung zu einer Knickinnenseite 2" der zentralen Umfangsrille 2. Die Knickinnenseiten 2" der Umfangsrille 2 befinden sich daher jeweils im Wesentlichen in Verlängerung der Schrägrillen 4. Die Schrägrillen 3 werden nachfolgend auch als "einmündende Schrägrillen 3" und die Schrägrillen 4 auch als "endende Schrägrillen 4" bezeichnet.

Die Schrägrillen 3, 4 setzen sich beim gezeigten Ausführungsbeispiel jeweils aus einem in Draufsicht leicht gebogen verlaufenden, laufstreifeninnenseitigen Rillenabschnitt 5 und einem zum Laufstreifenrand verlaufenden, zur Umfangsrichtung gegenüber dem Rillenabschnitt 5 stärker geneigten, schulterseitigen Rillenabschnitt 6 zusammen. Der laufstreifeninnenseitige Rillenabschnitt 5 der einmündenden Schrägrillen 3 weist - bezogen auf die Mittellinie m_{SR} - eine in die axiale Richtung projizierte Länge l₁ auf, welche mindestens 25%, insbesondere mindestens 27%, und besonders bevorzugt mindestens 30% der Breite B der Bodenaufstandsfläche beträgt. Die auf analoge Weise ermittelte, in Fig. 1 nicht eingezeichnete Länge des laufstreifeninnenseitigen Rillenabschnittes 5 der endenden Schrägrillen 4 ist gegenüber der Länge l₁ des Rillenabschnittes 5 der einmündenden Schrägrillen 3 um den bereits erwähnten Abstand a₁ geringer. Der laufstreifeninnenseitige Rillenabschnitt 5 erstreckt sich - bezogen auf eine die im Rillenabschnitt 5 liegenden Enden der Mittellinie m_{SR} verbindende Linie - zur axialen Richtung unter einem Winkel α von 30° bis 55°, insbesondere von 40° bis 50°. Der schulterseitige Rillenabschnitt 6 erstreckt sich bezogen auf die Mittellinie m_{SR} zur axialen Richtung unter einem Winkel β von 0° bis 18°, insbesondere von zumindest 8°.

In jeder Laufstreifenhälfte verlaufen zwischen in Umfangsrichtung benachbarten Schrägrillen 3, 4 eine weiter laufstreifeninnenseitig ausgebildete Rille 7a und eine weiter laufstreifenaußenseitig ausgebildete Rille 7b, wobei die Rillen 7a und 7b in die jeweiligen laufstreifeninnenseitigen Rillenabschnitte 5 einmünden. Die Rillen 7a, 7b verlaufen in Draufsicht gerade sowie - bezogen auf ihre Mittellinien - zur Umfangsrichtung unter einem Winkel γ von 5° bis 20°, insbesondere von 13° bis 17°, und sind bezüglich der Umfangsrichtung gegensinnig zu den Rillenabschnitten 5 geneigt. Die Rillen 7a weisen jeweils - bezogen auf einen mittig auf ihrer Mittellinie liegenden Punkt - zur Reifenäquatorialebene (Linie A-A) in axialer Richtung einen Abstand a₂ auf, welcher 4,5% bis 24,5%, insbesondere 10% bis 17%, der Breite B der Bodenaufstandsfläche beträgt. Der Abstand a₂ ist größer ausgeführt als der Abstand a₁, sodass die Rillenabschnitte 5 der endenden Schrägrillen 4 laufstreifeninnenseitig mit einem Endabschnitt über die Rillen 7a hinausragen. Die Rillen 7b weisen - bezogen auf einen mittig auf ihrer Mittellinie liegenden Punkt - zur Reifenäquatorialebene (Linie A-A) in axialer Richtung einen Abstand a₃ auf, welcher 21,5% bis 41,5%, insbesondere 25% bis 38%, der Breite B der Bodenaufstandsfläche beträgt.

Die Rillen 7a, 7b weisen eine von ihrem beim Abrollen des Reifens bei Vorwärtsfahrt (Pfeil R) zuerst in den Untergrund eintretenden, "einlaufenden" Ende 7' zu ihrem anderen, "auslaufenden" Ende 7" kontinuierlich zunehmende Breite auf, wobei eine mittlere Breite der Rillen 7a, 7b, welche sich aus der Summe der beiden Breiten an den Enden 7', 7" geteilt durch zwei ergibt, 2,0 mm bis 5,0 mm beträgt. Ferner weisen die Rillen 7a, 7b in radialer Richtung eine Tiefe von 40% bis 70% der Profiltiefe auf, wobei die Tiefe der weiter laufstreifeninnenseitig ausgebildeten Rillen 7a mindestens 55% der Profiltiefe und jene der weiter laufstreifenaußenseitige ausgebildeten Rillen 7b insbesondere bis zu 50% der Profiltiefe beträgt. Vom Rillengrund der Rillen 7a, 7b geht jeweils ein in radialer Richtung verlaufender Einschnitt 8 aus, welcher eine Tiefe von zumindest 1,5 mm aufweist, höchstens bis auf 100% der Profiltiefe reicht, eine Breite von 0,4 mm bis 0,8 mm aufweist und unter sich dem erwähnten Winkel γ durch die jeweilige Rille 7a, 7b hindurcherstreckt.

Die beschriebene Profilierung verleiht dem Laufstreifen in jeder Laufstreifenhälfte schulterseitige Profilblöcke 9 sowie mittlere Profilblöcke 10 und 11. Die schulterseitigen Profilblöcke 9 erstrecken sich über den Bereich der schulterseitigen Rillenabschnitte 6 und sind laufstreifeninnenseitig von den Rillen 7b begrenzt. Die mittleren Profilblöcke 10 sind benachbart zu den schulterseitigen Profilblöcken 9 ausgebildet, wobei sie seitlich von den Rillen 7a, 7b begrenzt sind und in Draufsicht eine parallelogrammförmige Gestalt aufweisen.

Die Profilblöcke 11 liegen an der zentralen Umfangsrille 2, wobei in jeden Profilblock 11 der laufstreifeninnenseitige Rillenabschnitt 5 einer vor der zentralen Umfangsrille 2 endenden Schrägrille 4 hineinverläuft, sodass die Profilblöcke 11 in Draufsicht - je nach Laufstreifenhälfte - eine C-artige bzw. gespiegelt C-artige Gestalt aufweisen. Zwischen dem freien Ende jedes Rillenabschnittes 5 der Schrägrillen 4 und der zentralen Umfangsrille 2 verläuft ein in Draufsicht einfach geknickten Einschnitt 12, welcher dem jeweiligen Profilblock 11, ein beim Abrollen des Reifens bei Vorwärtsfahrt zuerst in den Untergrund eintretenden, einlaufenden Blocksegment 11a und einem auslaufenden Blocksegment 11b verleiht. Der Einschnitt 12 weist in radialer Richtung eine konstante Tiefe von 70% bis 100%, insbesondere von bis zu 95%, der Profiltiefe, ferner eine insbesondere konstante Breite b₂ von 0,5 mm bis 2,0 mm, vorzugsweise von 0,8 mm bis 1,5 mm, auf und setzt sich in Draufsicht aus einem in Fortsetzung des jeweiligen Rillenabschnittes 5 verlaufenden Einschnittabschnitt 12a und einem in die zentrale Umfangsrille 2 einmündenden Einschnittabschnitt 12b zusammen. Der Einschnittabschnitt 12a verläuft in Draufsicht leicht gebogen oder gerade und weist beim gezeigten Ausführungsbeispiel eine Einschnittwand 12a' auf, welche in Fortsetzung der das einlaufende Blocksegment 11a mitbegrenzenden Rillenflanke des Rillenabschnittes 5 verläuft. Der Einschnittabschnitt 12b verläuft, in Draufsicht betrachtet, zur axialen Richtung unter einem Winkel δ von 0° bis 15°, insbesondere von zumindest 5°, vorzugsweise von 8° bis 12°.

Die Profilblöcke 9, 10, 11 sind beim gezeigten Ausführungsbeispiel mit parallel zueinander verlaufenden Einschnitten 13 versehen, welche die Profilblöcke 9, 10 bzw. die Blocksegmente 11a, 11b durchqueren. Die Einschnitte 13 weisen eine Breite von insbesondere 0,4 mm bis 0,8 mm und zumindest abschnittsweise eine Tiefe von 75% bis 100%, insbesondere bis zu 95%, der Profiltiefe auf. Innerhalb der schulterseitigen Profilblöcke 9 verlaufen die Einschnitte 13 in Draufsicht parallel zu den schulterseitigen Rillenabschnitten 6 der Schrägrillen 3, 4 und daher unter dem erwähnten Winkel β sowie in Draufsicht kaum merkbar gebogen. Die in den mittleren Profilblöcken 10 ausgebildeten Einschnitte 13 münden in die Rillen 7a, 7b ein, verlaufen parallel zu den laufstreifeninnenseitigen Rillenabschnitten 5 der Schrägrillen 3, 4 und daher unter dem erwähnten Winkel α sowie in Draufsicht ebenfalls kaum merkbar gebogen. In den Profilblöcken 11 verlaufen die Einschnitte 13 in Draufsicht gerade sowie zur axialen Richtung unter einem Winkel ε von 2° bis 15°, insbesondere von 7,5° bis 12,5°, wobei sie relativ zur axialen Richtung gegensinnig zu den den jeweiligen Profilblock 11 mitbegrenzenden Rillenabschnitten 5 der Schrägrillen 3, 4 verlaufen. Beim gezeigten Ausführungsbeispiel stimmt die Größe des Winkels ε der Einschnitte 13 in den Profilblöcken 11 mit der Größe des Winkels δ des Einschnittabschnittes 12b der die Blocksegmente 11a, 11b trennenden Einschnitte 12 überein.

Die Erfindung ist auf die dargestellte und beschriebene Ausführungsvariante nicht beschränkt.

Insbesondere können die Schrägrillen 3, 4 unabhängig voneinander in Draufsicht auch gerade verlaufen. Die Schrägrillen 3, 4 können ferner auch zwei in Draufsicht gerade verlaufende Rillenabschnitte 5, 6 aufweisen oder "durchgehend", einheitlich gebogen ausgeführt sein. Die Einschnitte 12, 13 können in Draufsicht zumindest abschnittsweise zick-zack- oder wellenförmig verlaufen.

Ferner können zwei im Bereich der Reifenäquatorialebene verlaufende zentrale Umfangsrillen vorgesehen sein, welche eine an der Reifenäquatorialebene in Umfangsrichtung umlaufende, gegebenenfalls mit Einschnitten und/oder Rillen strukturierte Profilrippe begrenzen.

### Bezugszeichenliste

- 1: Laufstreifen
- 2: zentrale Umfangsrille
- 2': Knickaußenseite
- 2": Knickinnenseite
- 2a: Rillenabschnitt
- 3: Schrägrille
- 4: Schrägrille
- 5: laufstreifeninnenseitiger Rillenabschnitt
- 6: schulterseitiger Rillenabschnitt
- 7a, 7b: Rille
- 7`: einlaufendes Ende
- 7": auslaufendes Ende
- 8: Einschnitt
- 9: schulterseitiger Profilblock
- 10: mittlerer Profilblock
- 11: Doppelblock
- 11a: einlaufendes Blocksegment
- 11b: auslaufendes Blocksegment
- 12: Einschnitt
- 12a: Einschnittabschnitt
- 12a': Einschnittwand
- 12b: Einschnittabschnitt
- 13: Einschnitt
- A-A: Linie (Äquatorialebene)
- a₁, a₂, a₃: Abstand
- b₁, b₂: Breite
- B: Breite
- 1: Linie (seitlicher Rand der Bodenaufstandsfläche)
- m_{SR}: Mittellinie
- R: Pfeil (Abrollrichtung)
- α, β, γ, δ, ε: Winkel

## Patentansprüche

1. Fahrzeugluftreifen mit einem laufrichtungsgebunden ausgeführten Laufstreifen (1), welcher durch V-förmig zueinander verlaufende Schrägrillen (3, 4), jeweils zwei zwischen in Umfangsrichtung benachbarten Schrägrillen (3, 4) verlaufende weitere Rillen (7a, 7b) und zumindest eine im Bereich der Reifenäquatorialebene (A-A) verlaufende, zentrale Umfangsrille (2) in Profilblöcke (9, 10, 11) gegliedert ist, wobei in jeder Laufstreifenhälfte Schrägrillen (3), welche in die bzw. in eine zentrale Umfangsrille (2) einmünden, und Schrägrillen (4), welche vor der bzw. vor einer zentralen Umfangsrille (2) enden, verlaufen, wobei in Umfangsrichtung jeweils eine vor der bzw. vor einer zentralen Umfangsrille (2) endende Schrägrille (4) mit einer in die bzw. in eine zentrale Umfangsrille (2) einmündenden Schrägrille (3) abwechselt und wobei an der jeweiligen zentralen Umfangsrille (2) Profilblöcke (11) gebildet sind, in welche die vor dieser zentralen Umfangsrille (2) endenden Schrägrillen (4) hineinverlaufen,
dadurch geknnzeichnet,
dass die weiteren Rillen (7a, 7a) bezüglich der Umfangsrichtung gegensinnig zu den Schrägrillen (3, 4) geneigt sind, wobei die zentrale(n) Umfangsrille(n) (2) in Draufsicht zickzack-förmig verläuft bzw. verlaufen und sich aus geraden, jeweils an einem Rillenknick aneinander anschließenden Rillenabschnitten (2a) zusammensetzt bzw. zusammensetzen, wobei die in der einen Laufstreifenhälfte verlaufenden Schrägrillen (3, 4) zu den in der anderen Laufstreifenhälfte verlaufenden Schrägrillen (3, 4) in Umfangsrichtung versetzt sind und wobei die Schrägrillen (3), welche in die bzw. eine der zentrale(n) Umfangsrille(n) (2) einmünden, jeweils an einer außenseitigen Knickstelle der zentralen Umfangsrille (2) einmünden.

2. Fahrzeugluftreifen nach Anspruch 1, **dadurch gekennzeichnet, dass** der Laufstreifen eine einzige an der Reifenäquatorialebene verlaufende, zentrale Umfangsrille (2) aufweist.

3. Fahrzeugluftreifen nach Anspruch 1 oder 2, **dadurch gekennzeichnet, dass** in den Profilblöcken (11), in welche Schrägrillen (4) hineinverlaufen, jeweils ein Einschnitt (12) mit einer Tiefe von 70% bis 100% der Profiltiefe und einer Breite (b₂) von 0,5 mm bis 2,0 mm, vorzugsweise von 0,8 mm bis 1,5 mm, ausgebildet ist, wobei der Einschnitt (12) zwischen dem laufstreifeninnenseitigen Ende der jeweiligen Schrägrille (4) und der bzw. einer zentralen Umfangsrille (2) verläuft.

4. Fahrzeugluftreifen nach einem Anspruch 3, **dadurch gekennzeichnet, dass** sich der Einschnitt (12) aus einem in Fortsetzung der Schrägrille (4) verlaufenden Einschnittabschnitt (12a) und einem in die bzw. die jeweilige zentrale Umfangsrille (2) einmündenden, zur axialen Richtung unter einem Winkel (δ) von 0° bis 15°, insbesondere von zumindest 5°, vorzugsweise von 8° bis 12°, verlaufenden Einschnittabschnitt (12b) zusammensetzt.

5. Fahrzeugluftreifen nach einem der Ansprüche 1 bis 4, **dadurch gekennzeichnet, dass** die zentrale(n) Umfangsrille(n) (2) an der Laufstreifenperipherie eine konstante Breite (b₁) von 3,0 mm bis 5,5 mm, insbesondere von bis zu 4,5 mm, aufweist bzw. aufweisen.

6. Fahrzeugluftreifen nach einem der Ansprüche 1 bis 5, **dadurch gekennzeichnet, dass** die Rillenabschnitte (2a) der zentralen Umfangsrille(n) (2) zur Umfangsrichtung unter einem Winkel von 3° bis 15°, insbesondere von bis zu 12°, verlaufen.

7. Fahrzeugluftreifen mit einem Laufstreifen mit parallel zueinander verlaufenden Einschnitten (12) in den Profilblöcken (9, 10, 11a, 11b) nach einem der Ansprüche 1 bis 6, **dadurch gekennzeichnet,**
**dass** die Einschnitte (12) in den Profilblöcken (11), in welche Schrägrillen (4) hineinverlaufen, in Draufsicht zur axialen Richtung unter einem Winkel (δ) von 0° bis 15°, insbesondere von zumindest 5°, vorzugsweise von 8° bis 12°, verlaufen und dass die Einschnitte (12) in den sonstigen Profilblöcken (9, 10) in Draufsicht parallel zu den Schrägrillen (3, 4) verlaufen.

8. Fahrzeugluftreifen nach einem der Ansprüche 1 bis 7, **dadurch gekennzeichnet, dass** die Rillen (7a, 7b), welche zwischen in Umfangsrichtung benachbarten Schrägrillen (3, 4) verlaufen, eine Tiefe von 40% bis 70% der Profiltiefe aufweisen, wobei vom Rillengrund der Rillen (7a, 7b) jeweils ein sich durch die Rille (7a, 7b) hindurcherstreckender, in radialer Richtung verlaufender Einschnitt (8) mit einer Tiefe von mindestens 1,5 mm und einer Breite von 0,4 mm bis 0,8 mm ausgeht.

9. Fahrzeugluftreifen nach einem der Ansprüche 1 bis 8, **dadurch gekennzeichnet, dass** sich die Schrägrillen (3, 4) jeweils aus einem laufstreifeninnenseitigen Rillenabschnitt (5) und einem zum Laufstreifenrand verlaufenden, zur Umfangsrichtung gegenüber dem laufstreifeninnenseitigen Rillenabschnitt (5) stärker geneigten, schulterseitigen Rillenabschnitt (6) zusammensetzten, wobei die zwischen den Schrägrillen (3, 4) verlaufenden Rillen (7a, 7b) in die laufstreifeninnenseitigen Rillenabschnitte (5) einmünden.

10. Fahrzeugluftreifen nach einem der Ansprüche 1 bis 9, **dadurch gekennzeichnet, dass** die Schrägrillen (4), welche vor der bzw. vor einer zentralen Umfangsrille (2) enden, vor der Reifenäquatorialebene (A-A) in einem in axialer Richtung ermittelten Abstand (a₁) von 5% bis 15%, insbesondere von bis zu 12%, der Breite (B) der Bodenaufstandsfläche enden.

11. Fahrzeugluftreifen nach einem der Ansprüche 1 bis 10, **dadurch gekennzeichnet, dass** jeweils jene weiteren Rillen (7a), welche weiter laufstreifeninnenseitig verlaufen, bezogen auf einen mittig auf ihrer Mittellinie liegenden Punkt, zur Reifenäquatorialebene (A-A)in axialer Richtung einen Abstand (a₂) aufweisen, welcher 4,5% bis 24,5%, insbesondere 10% bis 17%, der Breite (B) der Bodenaufstandsfläche beträgt.

12. Fahrzeugluftreifen nach einem der Ansprüche 1 bis 11, **dadurch gekennzeichnet, dass** jene weiteren Rillen (7b), welche weiter laufstreifenaußenseitig verlaufen, bezogen auf einen mittig auf ihrer Mittellinie liegenden Punkt, zur Reifenäquatorialebene (A-A) in axialer Richtung einen Abstand (a₃) aufweisen, welcher 21,5% bis 41,5%, insbesondere 25% bis 38%, der Breite (B) der Bodenaufstandsfläche beträgt.

## Claims

1. Pneumatic vehicle tyre with a tread strip (1) of directional configuration which is divided into tread bars (9, 10, 11) by oblique channels (3, 4) which runs towards one another in a V-shape, in each case two further channels (7a, 7b) which run between adjacent oblique channels (3, 4) in the circumferential direction, and at least one central circumferential channel (2) which runs in the region of the tyre equator plane (A-A), oblique channels (3) which open into the or a central circumferential channel (2) and oblique channels (4) which end before the or a central circumferential channel (2) running in each tread strip half, in each case one oblique channel (4) which ends before the or a central circumferential channel (2) alternating in the circumferential direction with an oblique channel (3) which opens into the or a central circumferential channel (2), and tread bars (11) being formed on the respective central circumferential channel (2), into which tread bars (11) the oblique channels (4) which end before the said central circumferential channel (2) run,
**characterized in that**
the further channels (7a, 7a) are inclined with respect to the oblique channels (3, 4) in opposite directions with regard to the circumferential direction, the central circumferential channel/channels (2) running in a zigzag-shaped manner in plan view and being composed of straight channel sections (2a) which in each case adjoin one another at a channel bend, the oblique channels (3, 4) which run in the one tread strip half being offset in the circumferential direction with respect to the oblique channels (3, 4) which run in the other tread strip half, and the oblique channels (3) which open into the circumferential channel or one of the central circumferential channels (2) opening in each case at an outer bend point of the central circumferential channel (2).

2. Pneumatic vehicle tyre according to Claim 1, **characterized in that** the tread strip has a single central circumferential channel (2) which runs on the tyre equator plane.

3. Pneumatic vehicle tyre according to Claim 1 or 2, **characterized in that** in each case one sipe (12) with a depth of from 70% to 100% of the profile depth and a width (b₂) of from 0.5 mm to 2.0 mm, preferably of from 0.8 mm to 1.5 mm, is configured in the tread bars (11), into which oblique channels (4) run, the sipe (12) running between the tread strip inner-side end of the respective oblique channel (4) and the or a central circumferential channel (2).

4. Pneumatic vehicle tyre according to Claim 3, **characterized in that** the sipe (12) is composed of a sipe section (12a) which runs in a continuation of the oblique channel (4) and a sipe section (12b) which opens into the or the respective central circumferential channel (2) and runs at an angle (δ) of from 0° to 15°, in particular of at least 5°, preferably of from 8° to 12°, with respect to the axial direction.

5. Pneumatic vehicle tyre according to one of Claims 1 to 4, **characterized in that** the central circumferential channel/channels (2) has/have a constant width (bi) of from 3.0 mm to 5.5 mm, in particular of up to 4.5 mm, on the tread strip periphery.

6. Pneumatic vehicle tyre according to one of Claims 1 to 5, **characterized in that** the channel sections (2a) of the central circumferential channel/channels (2) run at an angle of from 3° to 15°, in particular of up to 12°, with respect to the circumferential direction.

7. Pneumatic vehicle tyre with a tread strip with sipes (12), running parallel to one another, in the tread bars (9, 10, 11a, 11b) according to one of Claims 1 to 6, **characterized in that** the sipes (12) in the tread bars (11), into which oblique channels (4) run, run at an angle (δ) of from 0° to 15°, in particular of at least 5°, preferably of from 8° to 12°, with respect to the axial direction in plan view, and **in that** the sipes (12) in the other tread bars (9, 10) run parallel to the oblique channels (3, 4) in plan view.

8. Pneumatic vehicle tyre according to one of Claims 1 to 7, **characterized in that** the channels (7a, 7b) which run between oblique channels (3, 4) which are adjacent in the circumferential direction have a depth of from 40% to 70% of the profile depth, in each case one sipe (8) which runs in the radial direction and extends through the channel (7a, 7b) with a depth of at least 1.5 mm and a width of from 0.4 mm to 0.8 mm emanating from the channel bottom of the channels (7a, 7b).

9. Pneumatic vehicle tyre according to one of Claims 1 to 8, **characterized in that** the oblique channels (3, 4) are composed in each case of a tread strip inner-side channel section (5) and a shoulder-side channel section (6) which runs towards the tread strip edge and is inclined with respect to the circumferential direction to a more pronounced extent than the tread strip inner-side channel section (5), the channels (7a, 7b) which run between the oblique channels (3, 4) opening into the tread strip inner-side channel sections (5).

10. Pneumatic vehicle tyre according to one of Claims 1 to 9, **characterized in that** the oblique channels (4) which end before the or a central circumferential channel (2) end before the tyre equator plane (A-A) at a spacing (a₁), determined in the axial direction, of from 5% to 15%, in particular of up to 12%, of the width (B) of the ground contact area.

11. Pneumatic vehicle tyre according to one of Claims 1 to 10, **characterized in that** in each case those further channels (7a) which run further on the tread strip inner side are at a spacing (a₂), in relation to a point which lies centrally on their centre line, in the axial direction from the tyre equator plane (A-A), which spacing (a₂) is from 4.5% to 24.5%, in particular from 10% to 17%, of the width (B) of the ground contact area.

12. Pneumatic vehicle tyre according to one of Claims 1 to 11, **characterized in that** those further channels (7b) which run further on the tread strip outer side are at a spacing (a₃), in relation to a point which lies centrally on their centre line, in the axial direction from the tyre equator plane (A-A), which spacing (a₃) is from 21.5% to 41.5%, in particular from 25% to 38%, of the width (B) of the ground contact area.

## Revendications

1. Pneumatique de véhicule comprenant une bande de roulement (1) réalisée sous forme directionnelle, qui est subdivisée en blocs profilés (9, 10, 11) par des rainures obliques (3, 4) s'étendant en forme de V l'une par rapport à l'autre, par respectivement deux autres rainures (7a, 7b) s'étendant entre des rainures obliques (3, 4) voisines dans la direction circonférentielle, et par au moins une rainure circonférentielle centrale (2), s'étendant dans la zone du plan équatorial du pneu (A-A), des rainures obliques (3), qui débouchent dans la ou dans une rainure circonférentielle centrale (2), et des rainures obliques (4), qui se terminent avant la ou avant une rainure circonférentielle centrale (2), s'étendant dans chaque moitié de la bande de roulement, une rainure oblique (4) se terminant avant la ou avant une rainure circonférentielle centrale (2) alternant respectivement dans la direction circonférentielle avec une rainure oblique (3) débouchant dans la ou dans une rainure circonférentielle centrale (2), et des blocs profilés (11) étant formés au niveau de la rainure circonférentielle centrale respective (2), dans lesquels s'étendent les rainures obliques (4) se terminant avant cette rainure circonférentielle centrale (2),
**caractérisé en ce que**
les autres rainures (7a, 7a) sont inclinées en sens inverse des rainures obliques (3, 4) par rapport à la direction circonférentielle, la ou les rainures circonférentielles centrales (2) s'étendant, en vue de dessus, en forme de zigzag et se composant de sections de rainures droites (2a), se raccordant respectivement les unes aux autres au niveau d'un coude de rainure, les rainures obliques (3, 4) s'étendant dans l'une des moitiés de bande de roulement étant décalées dans la direction circonférentielle par rapport aux rainures obliques (3, 4) s'étendant dans l'autre moitié de bande de roulement, et les rainures obliques (3) qui débouchent dans la ou une des rainures circonférentielles centrales (2) débouchant respectivement au niveau d'un point de coude extérieur de la rainure circonférentielle centrale (2).

2. Pneumatique de véhicule selon la revendication 1, **caractérisé en ce que** la bande de roulement présente une seule rainure circonférentielle centrale (2), s'étendant sur le plan équatorial du pneumatique.

3. Pneumatique de véhicule selon la revendication 1 ou 2, **caractérisé en ce que**, dans les blocs profilés (11) dans lesquels s'étendent des rainures obliques (4), est réalisée respectivement une entaille (12) ayant une profondeur de 70 % à 100 % de la profondeur de profilé et une largeur (b₂) de 0,5 mm à 2,0 mm, de préférence de 0,8 mm à 1,5 mm, l'entaille (12) s'étendant entre l'extrémité côté intérieur de la bande de roulement de la rainure oblique (4) respective et la ou une rainure circonférentielle centrale (2).

4. Pneumatique de véhicule selon la revendication 3, **caractérisé en ce que** l'entaille (12) se compose d'une section d'entaille (12a) s'étendant dans le prolongement de la rainure oblique (4) et d'une section d'entaille (12b) débouchant dans la rainure circonférentielle centrale ou dans la rainure circonférentielle centrale (2) respective, s'étendant par rapport à la direction axiale selon un angle (δ) de 0° à 15°, notamment d'au moins 5°, de préférence de 8° à 12°.

5. Pneumatique de véhicule selon l'une quelconque des revendications 1 à 4, **caractérisé en ce que** la ou les rainures circonférentielles centrales (2) présentent au niveau de la périphérie de la bande de roulement une largeur constante (b₁) de 3,0 mm à 5,5 mm, notamment de jusqu'à 4,5 mm.

6. Pneumatique de véhicule selon l'une quelconque des revendications 1 à 5, **caractérisé en ce que** les sections de rainure (2a) de la ou des rainures circonférentielles centrales (2) s'étendent selon un angle de 3° à 15°, notamment de jusqu'à 12°, par rapport à la direction circonférentielle.

7. Pneumatique de véhicule comprenant une bande de roulement comprenant des entailles (12) s'étendant parallèlement les unes aux autres dans les blocs profilés (9, 10, 11a, 11b) selon l'une quelconque des revendications 1 à 6, **caractérisé en ce que**
les entailles (12) dans les blocs profilés (11) dans lesquels s'étendent des rainures obliques (4) s'étendent, en vue de dessus, par rapport à la direction axiale, selon un angle (δ) de 0° à 15°, notamment d'au moins 5°, de préférence de 8° à 12°, et **en ce que** les entailles (12) dans les autres blocs profilés (9, 10) s'étendent, en vue de dessus, parallèlement aux rainures obliques (3, 4).

8. Pneumatique de véhicule selon l'une quelconque des revendications 1 à 7, **caractérisé en ce que** les rainures (7a, 7b) qui s'étendent entre des rainures obliques (3, 4) voisines dans la direction circonférentielle présentent une profondeur de 40 % à 70 % de la profondeur de profilé, une entaille (8) d'une profondeur d'au moins 1,5 mm et d'une largeur de 0,4 mm à 0,8 mm, qui s'étend dans la direction radiale, qui traverse la rainure (7a, 7b), partant respectivement du fond de rainure des rainures (7a, 7b).

9. Pneumatique de véhicule selon l'une quelconque des revendications 1 à 8, **caractérisé en ce que** les rainures obliques (3, 4) se composent respectivement d'une section de rainure côté intérieur de la bande de roulement (5) et d'une section de rainure côté épaulement (6) s'étendant vers le bord de la bande de roulement, plus fortement inclinée par rapport à la section de rainure côté intérieur de la bande de roulement (5) dans la direction circonférentielle, les rainures (7a, 7b) qui s'étendent entre les rainures obliques (3, 4) débouchant dans les sections de rainure côté intérieur de la bande de roulement (5).

10. Pneumatique de véhicule selon l'une quelconque des revendications 1 à 9, **caractérisé en ce que** les rainures obliques (4), qui se terminent avant la ou avant une rainure circonférentielle centrale (2), se terminent avant le plan équatorial du pneumatique (A-A) à une distance (a₁), déterminée dans la direction axiale, de 5 % à 15 %, notamment de jusqu'à 12 %, de la largeur (B) de la surface de contact avec le sol.

11. Pneumatique de véhicule selon l'une quelconque des revendications 1 à 10, **caractérisé en ce que** les autres rainures (7a) qui s'étendent plus loin sur le côté intérieur de la bande de roulement présentent respectivement, par rapport à un point situé au milieu de leur ligne médiane, une distance (a₂) par rapport au plan équatorial du pneumatique (A-A) dans la direction axiale, qui est de 4,5 % à 24,5 %, notamment 10 % à 17 %, de la largeur (B) de la surface de contact avec le sol.

12. Pneumatique de véhicule selon l'une quelconque des revendications 1 à 11, **caractérisé en ce que** les autres rainures (7b) qui s'étendent plus loin sur le côté extérieur de la bande de roulement présentent respectivement, par rapport à un point situé au milieu de leur ligne médiane, une distance (a₃) par rapport au plan équatorial du pneumatique (A-A) dans la direction axiale, qui est de 21,5 % à 41,5 %, notamment 25 % à 38 %, de la largeur (B) de la surface de contact avec le sol.
